# FASCICULE DE BREVET EUROPEEN

(11) **EP 2 917 055 B1**
(45) Date de publication et mention de la délivrance du brevet: **04.01.2017**
(21) Numéro de dépôt: 13805456.4
(22) Date de dépôt: 06.11.2013
(51) Int. Cl.: B60J 1/00

(54) **OUTIL D'AIDE A L'INSERTION D'UNE VITRE DANS LE JOINT D'ETANCHEITE SUPERIEUR D'UNE PORTE DE VEHICULE AUTOMOBILE**
WERKZEUG ZUR UNTERSTÜTZUNG DES EINSETZENS EINER FENSTERSCHEIBE IN DIE OBERE DICHTUNGSLEISTE EINER KRAFTFAHRZEUGTÜR
TOOL TO ASSIST WITH INSERTING A WINDOW GLASS IN THE UPPER SEALING STRIP OF A MOTOR VEHICLE DOOR

(30) Priorité: 09.11.2012 FR 1260684
(43) Date de publication de la demande: 16.09.2015
(73) Titulaire: PSA Peugeot Citroën Automobiles S.A., 78140 Velizy Villacoublay (FR)
(72) Inventeur: OLLIE, Jean Francois, F-78430 Louveciennes (FR)
(74) Mandataire: Fosse, Danièle
(86) Numéro de dépôt international: PCT/FR2013/052638
(87) Numéro de publication internationale: WO 2014/072631

(56) Documents cités:
- WO-A1-2012/131220
- US-A1- 2010 011 554

## Description

La présente invention revendique la priorité de la demande française 1260684 déposée le 9 novembre 2012.

La présente invention concerne un outil d'aide à l'insertion d'une vitre dans le joint d'étanchéité supérieur d'une porte de véhicule automobile.

Un tel outil est connu du document WO 2012/131220 A1.

On sait que l'encadrement d'une porte de véhicule automobile comprend un joint d'étanchéité dans lequel vient s'insérer la vitre de la porte, en fin de course de fermeture.

La demanderesse a constaté, sur certains véhicules, lors du montage de la vitre dans la porte, des difficultés voire une impossibilité de fermeture totale de la vitre.

Ce problème est dû à une déformation de la partie supérieure du joint d'étanchéité qui bloque la vitre avant sa fin de course de fermeture.

Pour remédier à ce problème, il était nécessaire de procéder systématiquement à des retouches coûteuses.

Le but de la présente invention est de remédier à cet inconvénient.

Ce but est atteint, selon l'invention, grâce à un outil d'aide à l'insertion d'une vitre dans le joint d'étanchéité supérieur d'une porte de véhicule automobile, caractérisé en ce qu'il comprend deux lames en matière rigide et élastique comprenant une première zone dans laquelle les deux lames sont en contact l'une avec l'autre sur une partie de leur longueur et une seconde zone dans laquelle les deux lames sont espacées et parallèles sur la partie restante de leur longueur, les extrémités des deux lames dans cette seconde zone étant destinées à être engagées sur l'aile extérieure dudit joint d'étanchéité pour être en appui respectivement sur la face extérieure et sur la face intérieure de ladite aile extérieure du joint.

Cet outil permet, lorsqu'il est en position sur l'aile extérieure du joint d'étanchéité de la porte, de guider le déplacement de la vitre vers sa position de fermeture complète, sans rencontrer d'obstacle dû notamment à la déformation du joint d'étanchéité supérieur de la porte.

L'outil selon l'invention évite ainsi d'avoir recours systématiquement à des retouches.

Dans une version préférée de l'invention, les deux parties des lames situées dans la première zone forment un angle obtus avec les parties de lames de la seconde zone.

Selon d'autres particularités avantageuses :
- le sommet de l'angle obtus formé par l'une des lames est décalé par rapport au sommet de l'angle obtus formé par l'autre lame ;
- ledit angle obtus et le décalage entre les sommets de l'angle obtus sont tels que lorsque les extrémités des deux lames sont engagées sur l'aile extérieure du joint d'étanchéité, la partie de l'une des lames, située dans la première zone forme un angle aigu avec la vitre et puisse guider le déplacement de celle-ci vers la partie de cette lame située dans la seconde zone.

Le guidage du déplacement de la vitre permet ainsi à celle-ci de se loger correctement dans le joint, sans risquer un blocage de la vitre dans une position non complètement fermée.

Dans un mode de réalisation particulièrement avantageux de l'invention, l'outil comprend des moyens pour régler le décalage entre les sommets de l'angle obtus formé par les deux lames.

Ces moyens permettent également de régler l'espacement entre les lames dans la seconde zone de l'outil notamment pour adapter cet espacement à l'épaisseur de l'aile extérieure du joint d'étanchéité.

De préférence, dans la première zone, les deux lames sont guidées l'une par rapport à l'autre pour pouvoir coulisser l'une sur l'autre.

Dans un mode de réalisation particulièrement pratique, dans la première zone, l'une des lames porte une tige filetée qui est engagée dans une lumière allongée réalisée dans l'autre lame, un écrou étant vissé sur ladite tige filetée pour serrer les deux lames l'une contre l'autre.

Selon une autre particularité avantageuse, ladite partie de l'une des lames située dans la première zone est recouverte extérieurement par une feuille de matière anti-friction.

Cette matière anti-friction facilite le glissement de la vitre sur ladite partie de la lame.

De préférence également, l'extrémité de la lame qui est destinée à prendre appui sur la face extérieure de l'aile extérieure du joint comporte un bossage pour maintenir en position cette extrémité de la lame.

Ce bossage évite ainsi tout risque de positionnement défectueux de l'outil sur le joint de la porte.

D'autres particularités et avantages de l'invention apparaîtront encore tout au long de la description ci-après.

Aux dessins annexés, donnés à titre d'exemples, non limitatifs :
- la figure 1 est une vue en perspective de l'outil d'aide à l'insertion d'une vitre dans le joint d'étanchéité d'une porte, selon l'invention,
- la figure 2 est une vue en perspective partielle à échelle agrandie de l'outil représenté sur la figure 1,
- la figure 3 est une vue en perspective d'une autre partie de l'outil selon l'invention,
- la figure 4 est une vue latérale partielle de l'outil selon l'invention,
- la figure 5 est une vue en perspective montrant le dessous de l'outil selon l'invention,
- la figure 6 est une vue en perspective montrant partiellement une porte de véhicule automobile et un outil selon l'invention, en position sur le joint de cette porte,
- les figures 7 à 11 sont des vues en coupe verticale montrant la porte, l'outil selon l'invention en position sur cette porte et diverses positions de la vitre lors de sa remontée vers sa potion de fermeture.

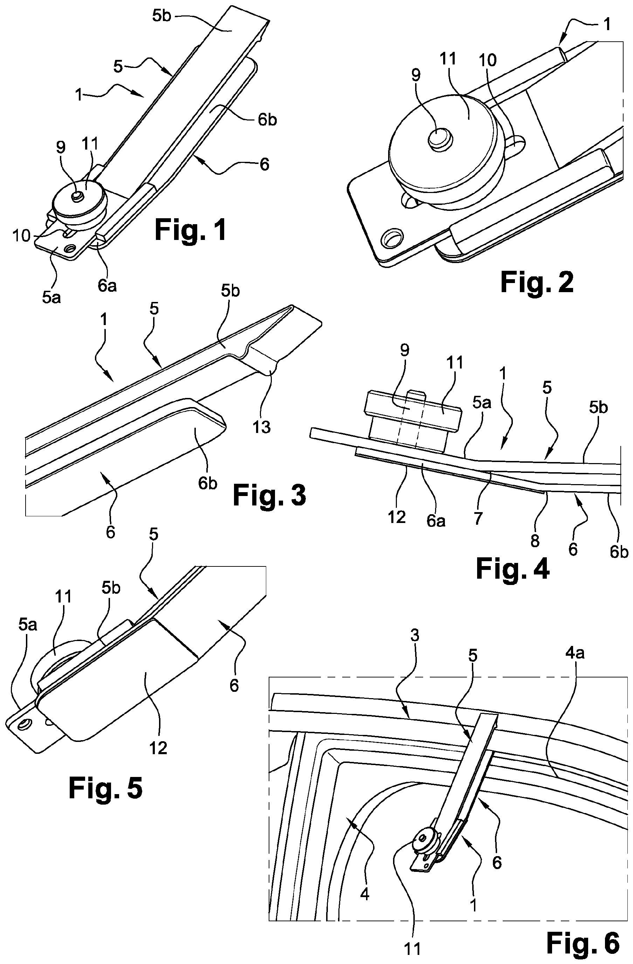

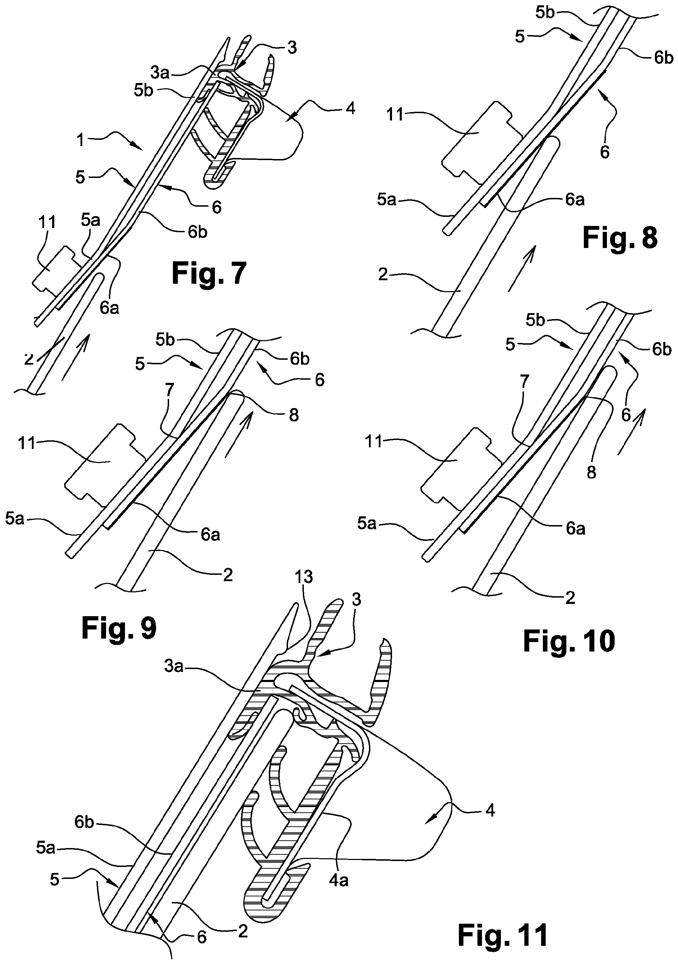

Les figures 1 à 11 représentent un outil 1 d'aide à l'insertion d'une vitre 2 (voir figures 7 à 11) dans le joint d'étanchéité supérieur 3 d'une porte 4 de véhicule automobile.

Conformément à l'invention, cet outil 1 comprend deux lames 5, 6 en matière rigide et élastique, par exemple en métal, comprenant une première zone 5a, 6a dans laquelle les deux lames 5, 6 sont en contact l'une avec l'autre sur une partie de leur longueur et une seconde zone 5b, 6b dans laquelle les deux lames 5, 6 sont espacées et parallèles sur la partie restante de leur longueur.

Les extrémités des deux lames 5, 6 dans la seconde zone 5b, 6b sont destinées à être engagées, comme montré par les figures 6, 7 et 11, sur l'aile extérieure 3a du joint d'étanchéité 3 pour être en appui respectivement sur la face extérieure et sur la face intérieure de cette aile extérieure 3a du joint 3.

Comme montré notamment par les figures 4, 7, 8, 9 et 10, les deux parties des lames 5, 6 situées dans la première zone 5a, 6a forment un angle obtus avec les parties des lames de la seconde zone 5b, 6b.

Ces mêmes figures montrent que le sommet 7 de l'angle obtus formé par l'une 5 des lames est décalé par rapport au sommet 8 de l'angle obtus formé par l'autre lame 6.

Par ailleurs, cet angle obtus et le décalage entre les sommets 7, 8 de l'angle obtus sont tels que lorsque les extrémités des deux lames 5, 6 sont engagées sur l'aile extérieure 3a du joint d'étanchéité 3, comme montré sur les figures 7 et 11, la partie 6a de la lame 6, située dans la première zone forme un angle obtus avec la vitre 2 et puisse guider le déplacement de celle-ci vers la partie 6b de cette lame 6 située dans la seconde zone, comme montré par les figures 8, 9 et 10.

L'outil selon l'invention comprend en outre des moyens pour régler le décalage entre les sommets de l'angle obtus formé par les deux lames 5, 6.

Les figures 1 et 2 montrent également que dans la première zone 5a, 6a, les deux lames 5, 6 sont guidées l'une par rapport à l'autre pour pouvoir coulisser l'une sur l'autre.

Dans la réalisation représentée, dans la première zone 5a, 6a, l'une 6 des lames porte une tige filetée 9 qui est engagée dans une lumière allongée 10 (voir figure 2) réalisée dans l'autre lame 5.

De plus, un écrou 11 est vissé sur la tige filetée 9 pour serrer les deux lames 5, 6 l'une contre l'autre.

Par ailleurs, les figures 4 et 5 montrent que la partie 6a de l'une 6 des lames située dans la première zone est recouverte extérieurement par une feuille 12 de matière anti-friction qui facilite le glissement de la vitre 2 sur la partie 6a de la lame 6.

En outre, les figures 3 et 11 montrent que l'extrémité 5b de la lame 5 qui est destinée à prendre appui sur la face extérieure de l'aile extérieure 3a du joint 3 comporte un bossage 13 pour maintenir en position cette extrémité 5b de la lame 5.

On va maintenant expliquer en référence aux figures 7 à 11 le mode opératoire et le fonctionnement de l'outil selon l'invention.

Avant mise en position de l'outil 1 selon l'invention sur la porte 4, cet outil 1 est préréglé pour que l'espacement entre les deux parties 5b, 6b des lames 5, 6 corresponde à l'épaisseur de l'aile extérieure 3a du joint 3 qui est solidaire de l'encadrement 4a de la porte 4.

Ce préréglage est réalisé en dévissant l'écrou 11, en faisant coulisser la lame 5 par rapport à la lame 6 puis en revissant l'écrou 11 pour bloquer les deux lames 5, 6.

Pour mettre en position l'outil 1 sur la porte 4, il suffit d'engager les extrémités 5b, 6b des lames 5, 6 de part et d'autre de l'aile extérieure 3a du joint d'étanchéité 3, comme montré sur les figures 6 et 7.

Le bossage 13 de l'extrémité 5b de la lame 5 empêche la descente de l'outil 1.

Dans cette position, la partie 5b, 6b des lames 5, 6 de l'outil 1 s'étend sensiblement parallèlement à la vitre 2 qui est en position basse, comme indiqué sur la figure 7.

Lors de la remontée de la vitre 2, celle-ci bute contre la partie inclinée 6a de la lame 6, comme montré sur la figure 8.

La vitre 2 est ainsi guidée par glissement contre la partie 6a de la lame 6 jusqu'au sommet 8 de l'angle obtus formé entre cette partie 6a et la partie 6b de la lame 6, comme indiqué sur la figure 9.

La vitre 2 est ensuite guidée par la partie 6b de la lame 6, comme montré sur la figure 10 jusqu'au joint 3 (voir figure 11).

L'outil 1 peut alors être retiré de l'aile 3a du joint 3 en le faisant glisser vers le bas.

## Revendications

1. Outil (1) d'aide à l'insertion d'une vitre (2) dans le joint d'étanchéité supérieur (3) d'une porte (4) de véhicule automobile, **caractérisé en ce qu'**il comprend deux lames (5, 6) en matière rigide et élastique comprenant une première zone (5a, 6a) dans laquelle les deux lames (5, 6) sont en contact l'une avec l'autre sur une partie de leur longueur et une seconde zone (5b, 6b) dans laquelle les deux lames (5, 6) sont espacées et parallèles sur la partie restante de leur longueur, les extrémités des deux lames dans cette seconde zone (5b, 6b) étant destinées à être engagées sur l'aile extérieure (3a) dudit joint d'étanchéité (3) pour être en appui respectivement sur la face extérieure et sur la face intérieure de ladite aile extérieure (3a) du joint (3).

2. Outil selon la revendication 1, **caractérisé en ce que** les deux parties (5a, 6a) des lames situées dans la première zone forment un angle obtus avec les parties (5b, 6b) de lames de la seconde zone.

3. Outil selon la revendication 2, **caractérisé en ce que** le sommet (7) de l'angle obtus formé par l'une (5) des lames est décalé par rapport au sommet (8) de l'angle obtus formé par l'autre lame (6).

4. Outil selon la revendication 3, **caractérisé en ce que** ledit angle obtus et le décalage entre les sommets (7, 8) de l'angle obtus sont tels que lorsque les extrémités (5b, 6b) des deux lames (5, 6) sont engagées sur l'aile extérieure (3a) du joint d'étanchéité (3), la partie (6a) de l'une (6) des lames, située dans la première zone forme un angle aigu avec la vitre (2) et puisse guider le déplacement de celle-ci vers la partie (6b) de cette lame située dans la seconde zone.

5. Outil selon l'une des revendications 3 ou 4, **caractérisé en ce qu'**il comprend des moyens pour régler le décalage entre les sommets (7, 8) de l'angle obtus formé par les deux lames (5, 6).

6. Outil selon la revendication 5, **caractérisé en ce que** dans la première zone, les deux lames (5, 6) sont guidées l'une par rapport à l'autre pour pouvoir coulisser l'une sur l'autre.

7. Outil selon la revendication 6, **caractérisé en ce que** dans la première zone (5a, 6a), l'une des lames porte une tige filetée (9) qui est engagée dans une lumière allongée (10) réalisée dans l'autre lame, un écrou (11) étant vissé sur ladite tige filetée (9) pour serrer les deux lames (5, 6) l'une contre l'autre.

8. Outil selon l'une des revendications 4 à 7, **caractérisé en ce que** ladite partie de l'une des lames située dans la première zone (5a, 6a) est recouverte extérieurement par une feuille (12) de matière anti-friction.

9. Outil selon l'une des revendications 1 à 8, **caractérisé en ce que** l'extrémité (5b) de la lame (5) qui est destinée à prendre appui sur la face extérieure de l'aile extérieure (3a) du joint (3) comporte un bossage (13) pour maintenir en position cette extrémité de la lame.

## Patentansprüche

1. Werkzeug (1) zur Unterstützung bei der Einfügung einer Glasscheibe (2) in die obere Dichtung (3) einer Tür (4) eines Kraftfahrzeugs, **dadurch gekennzeichnet**, das es zwei Klingen (5, 6) aus starrem und elastischem Material umfasst, umfassend einen ersten Bereich (5a, 6a), in dem die zwei Klingen (5, 6) miteinander auf einem Teil ihrer Länge in Kontakt stehen, und einen zweiten Bereich (5b, 6b), in dem die zwei Klingen (5, 6) auf dem restlichen Teil ihrer Länge beabstandet und parallel sind, wobei die Enden der zwei Klingen in diesem zweiten Bereich (5b, 6b) ausgelegt sind, um auf dem äußeren Flügel (3a) der Dichtung (3) eingegriffen zu sein, um jeweils auf der äußeren Seite und auf der inneren Seite des äußeren Flügels (3a) der Verbindung (3) aufzuliegen.

2. Werkzeug nach Anspruch 1, **dadurch gekennzeichnet, dass** die zwei Teile (5a, 6a) der Klingen, die sich im ersten Bereich befinden, einen stumpfen Winkel mit den Teilen (5b, 6b) der Klinge des zweiten Bereichs bilden.

3. Werkzeug nach Anspruch 2, **dadurch gekennzeichnet, dass** die Ecke (7) des stumpfen Winkels, gebildet durch eine (5) der Klingen, mit Bezug auf die Ecke (8) des stumpfen Winkels, gebildet durch die andere Klinge (6), versetzt ist.

4. Werkzeug nach Anspruch 3, **dadurch gekennzeichnet, dass** der stumpfe Winkel und die Versetzung zwischen den Ecken (7, 8) des stumpfen Winkels derart sind, dass, wenn die Enden (5b, 6b) der zwei Klingen (5, 6) auf dem äußeren Flügel (3a) der Dichtung (3) eingegriffen sind, der Teil (6a) einer (6) der Klingen, der sich im ersten Bereich befindet, einen spitzen Winkel mit der Glasscheibe (2) bildet und die Verschiebung dieser hin zum Teil (6b) dieser Klinge, die sich im zweiten Bereich befindet, führen kann.

5. Werkzeug nach einem der Ansprüche 3 oder 4, **dadurch gekennzeichnet, dass** es Mittel umfasst, um die Versetzung der Ecken (7, 8) des stumpfen Winkels, gebildet von den zwei Klingen (5, 6), einzustellen.

6. Werkzeug nach Anspruch 5, **dadurch gekennzeichnet, dass** im ersten Bereich die zwei Klingen (5, 6) mit Bezug aufeinander geführt werden, um aufeinander gleiten zu können.

7. Werkzeug nach Anspruch 6, **dadurch gekennzeichnet, dass** im ersten Bereich (5a, 6a) eine der Klingen eine Gewindestange (9) aufweist, die in eine längliche Öffnung (10) eingeführt ist, die in der anderen Klinge durchgeführt ist, wobei eine Mutter (11) auf die Gewindestange (9) geschraubt ist, um die zwei Klingen (5, 6) gegeneinander zu drücken.

8. Werkzeug nach einem der Ansprüche 4 bis 7, **dadurch gekennzeichnet, dass** der Teil der einen der Klingen, der sich im ersten Bereich (5a, 6a) befindet, außen durch ein Blatt (12) aus einem reibungsarmen Material bedeckt ist.

9. Werkzeug nach einem der Ansprüche 1 bis 8, **dadurch gekennzeichnet, dass** das Ende (5b) der Klinge (5), das ausgelegt ist, um auf der äußeren Seite des äußeren Flügels (3a) der Verbindung (3) aufzuliegen, eine Erhebung (13) umfasst, um dieses Ende der Klinge in seiner Position zu halten.

## Claims

1. Tool (1) for assisting the insertion of a window (2) in the top seal (3) of a motor vehicle door (4), **characterised in that** it comprises two blades (5, 6) made from rigid and elastic material, comprising a first zone (5a, 6a) in which the two blades (5, 6) are in contact with each other over a part of their length, and a second zone (5b, 6b) in which the two blades (5, 6) spaced apart and parallel over the remaining part of their length, the ends of the two blades in this second zone (5b, 6b) being intended to be engaged on the outer flange (3a) of said seal (3) so as to be in abutment respectively on the external face and on the internal face of said outer flange (3a) of the seal (3).

2. Tool according to claim 1, **characterised in that** the two parts (5a, 6a) of the blades situated in the first zone form an obtuse angle with the blade parts (5b, 6b) in the second zone.

3. Tool according to claim 2, **characterised in that** the vertex (7) of the obtuse angle formed by one (5) of the blades is offset with respect to the vertex (8) of the obtuse angle formed by the other blade (6).

4. Tool according to claim 3, **characterised in that** said obtuse angle and the offset between the vertices (7, 8) of the obtuse angle are such that, when the ends (5b, 6b) of the two blades (5, 6) are engaged on the outer flange (3a) of the seal (3), the part (6a) of one (6) of the blades, situated in the first zone, forms an acute angle with the window (2) and can guide the movement of the latter towards the part (6b) of this blade situated in the second zone.

5. Tool according to one of claims 3 or 4, **characterised in that** it comprises means for adjusting the offset between the vertices (7, 8) of the obtuse angle formed by the two blades (5, 6).

6. Tool according to claim 5, **characterised in that**, in the first zone, the two blades (5, 6) are guided with respect to each other so as to be able to slide one on the other.

7. Tool according to claim 6, **characterised in that**, in the first zone (5a, 6a), one of the blades carries a threaded rod (9) that is engaged in an elongate aperture (10) produced in the other blade, a nut (11) being screwed onto said threaded rod (9) in order to clamp the two blades (5, 6) against each other.

8. Tool according to one of claims 4 to 7, **characterised in that** said part of one of the blades situated in the first zone (5a, 6a) is covered externally by a sheet (12) of non-friction material.

9. Tool according to one of claims 1 to 8, **characterised in that** the end (5b) of the blade (5) that is intended to bear on the external face of the outer flange (3a) of the seal (3) comprises a protrusion (13) for holding this end of the blade in position.
